# EUROPEAN PATENT APPLICATION

(11) **EP 4 236 326 A1**
(43) Date of publication of application: **30.08.2023**
(21) Application number: 23150019.0
(22) Date of filing: 02.01.2023
(51) Int. Cl.: H04N 21/218, H04N 21/226, H04N 21/2387, H04N 21/4728, H04N 21/6587, H04N 21/81, H04N 21/854

(54) **A METHOD, AN APPARATUS AND A COMPUTER PROGRAM PRODUCT FOR TRANSMISSION OF IMMERSIVE MEDIA**

(30) Priority: 23.02.2022 FI 20225165
(71) Applicant: Nokia Technologies Oy, 02610 Espoo (FI)
(72) Inventor: MATE, Sujeet Shyamsundar, Tampere (FI); YOU, Yu, Kangasala (FI); CURCIO, Igor Danilo Diego, Tampere (FI); AHSAN, Saba, Espoo (FI); KONDRAD, Lukasz, Munich (DE); HANNUKSELA, Miska Matias, Tampere (FI); AKSU, Emre Baris, Tampere (FI)
(74) Representative: Nokia EPO representatives

(57) **Abstract**

The embodiments relate to a method and apparatus for viewport dependent delivery (VDD) of immersive media between a contribution device and a receiver. Connector node is generated in a proximity with the contribution device. Distributor node is generated in a proximity with the receiver device and an identifier of the distributor node is provided to the receiver, wherein the identifier of the distributor node is used by the receiver to instantiate a VDD session with the contribution device. VDD session is established between the contribution device and the connector node, between the connector node and the distributor node, and between the distributor node and the receiver. The immersive media is delivered by using the established VDD sessions, wherein the immersive media matches to a viewport provided by the receiver.

## Description

### Technical Field

The present solution generally relates to viewport dependent delivery of immersive media.

### Background

Devices that are able to capture image and video have evolved from devices capturing a limited angular field of view to devices capturing 360-degree content. These devices are able to capture visual and audio content all around them, i.e., they can capture the whole angular field of view, which may be referred to as 360 degrees field of view. More precisely, the devices can capture a spherical field of view (i.e., 360 degrees in all spatial directions). In addition to the new types of image/video capturing devices, also new types of output technologies have been invented and produced, such as head-mounted displays. These devices allow a person to see visual content all around him/her, giving a feeling of being "immersed" into the scene captured by the 360 degrees camera. The new capture and display paradigm, where the field of view is spherical, is commonly referred to as virtual reality (VR) and is believed to be the common way people will experience media content in the future.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus for viewport dependent delivery (VDD) of immersive media between a contribution device and a receiver device, the apparatus comprising means for generating a connector node in a proximity with the contribution device, wherein an identifier of the connector node is used by the contribution device to instantiate a VDD session; means for generating a distributor node in a proximity with the receiver device and for providing an identifier of the distributor node to the receiver device, wherein the identifier of the distributor node is used by the receiver device to instantiate a VDD session with the contribution device; means for establishing a VDD session between the contribution device and the connector node, between the connector node and the distributor node, and between the distributor node and the receiver device; and means for delivering the immersive media by using the established VDD sessions, wherein the immersive media matches to a viewport provided by the receiver device.

According to a second aspect, there is provided a method for viewport dependent delivery (VDD) of immersive media between a contribution device and a receiver device, wherein the method comprises generating a connector node in a proximity with the contribution device, wherein an identifier of the connector node is used by the contribution device to instantiate a VDD session; generating a distributor node in a proximity with the receiver device and providing an identifier of the distributor node to the receiver device, wherein the identifier of the distributor node is used by the receiver device to instantiate a VDD session with the contribution device; establishing a VDD session between the contribution device and the connector node, between the connector node and the distributor node, and between the distributor node and the receiver device; and delivering the immersive media by using the established VDD sessions, wherein the immersive media matches to a viewport provided by the receiver device.

According to a third aspect, there is provided an apparatus comprising at least one processor, memory including computer program code, the memory and the computer program code configured to, with the at least one processor, cause the apparatus to perform at least the following generate a connector node in a proximity with the contribution device, wherein an identifier of the connector node is used by the contribution device to instantiate a VDD session; generate a distributor node in a proximity with the receiver device and providing an identifier of the distributor node to the receiver device, wherein the identifier of the distributor node is used by the receiver device to instantiate a VDD session with the contribution device; establish a VDD session between the contribution device and the connector node, between the connector node and the distributor node, and between the distributor node and the receiver device; and deliver the immersive media by using the established VDD sessions, wherein the immersive media matches to a viewport provided by the receiver device.

According to a fourth aspect, there is provided computer program product comprising computer program code configured to, when executed on at least one processor, cause an apparatus or a system to generate a connector node in a proximity with the contribution device, wherein an identifier of the connector node is used by the contribution device to instantiate a VDD session; generate a distributor node in a proximity with the receiver device and providing an identifier of the distributor node to the receiver device, wherein the identifier of the distributor node is used by the receiver device to instantiate a VDD session with the contribution device; establish a VDD session between the contribution device and the connector node, between the connector node and the distributor node, and between the distributor node and the receiver device; and deliver the immersive media by using the established VDD sessions, wherein the immersive media matches to a viewport provided by the receiver device.

According to an embodiment, the viewport of the receiver device is delivered from the receiver device to the connector node by using the established VDD sessions.

According to an embodiment, a distributor node is generated for each of a plurality of receiver devices.

According to an embodiment, a connector node is generated for each distributor node.

According to an embodiment, the established VDD sessions use different VDD methods.

According to an embodiment, a VDD method is one of the following: scalable sphere-locked VDD with or without margin; sphere-locked VDD with or without margin.

According to an embodiment, available immersive media for consumption or states of available contribution devices is indicated.

According to an embodiment, the computer program product is embodied on a non-transitory computer readable medium.

### Description of the Drawings

In the following, various embodiments will be described in more detail with reference to the appended drawings, in which
- Fig. 1: shows an example of general viewport-dependent delivery (VDD) system;
- Fig. 2: shows an example of the end-to-end system overview;
- Fig. 3: shows an example of signaling steps between the contributing devices (e.g., IoT cameras), the provisioning service and the receiver UE;
- Fig. 4: shows an example of a multi-stage delivery system with a single connector-node and multiple distributor nodes;
- Fig. 5: shows an example of a multi-stage delivery system with a secondary connector-node;
- Fig. 6: illustrates advantages of the present embodiments;
- Fig. 7: is a flowchart illustrating a method according to an embodiment; and
- Fig. 8: shows an apparatus according to an embodiment.

### Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. References to one or an embodiment in the present disclosure can be, but not necessarily are, reference to the same embodiment and such references mean at least one of the embodiments.

Reference in this specification to "one embodiment" or "an embodiment" means that a particular feature, structure, or characteristic described in connection with the embodiment in included in at least one embodiment of the disclosure.

Immersive volumetric content refers to a content with six degrees of freedom (6DoF: three angles, yaw, pitch, roll) within a viewing space wherein the content is being captured by multiple cameras. A characteristic of immersive video playback is that a viewer can control the view position and orientation of the content. The viewer may use a playback device, such as a head-mounted display (HMD), a holographic display, or an ordinary 2D (two-dimensional) display with input of viewer's position and orientation.

An immersive video encoder is capable of processing multiple input views to enable the rendering of any intermediate viewpoint selected by the viewer. For example, a MPEG immersive video (MIV) defined in ISO/IEC 23090-12 has been designed to accommodate any camera arrangement, with the encoder selecting the most appropriate information to be signaled to enable the rendering of any intermediate, non-captured view.

The present embodiments are related to scalable viewport dependent delivery (VDD) of immersive media with low latency or real-time delivery scenarios using RTP/RTCP (Real-time Transfer Protocol/RTP Control Protocol). This has relevance to a ITT4RT (Immersive Teleconferencing and Telepresence for Remote terminals) WI but more significantly related to implementation of this standard for scalable IoT (Internet of Things) applications. Relevant technical specifications are 3GPP TS 26.114: "IP Multimedia Subsystem (IMS); Multimedia telephony, Media handling and interaction" and 3GPP TS 26.223: "Telepresence using the IP Multimedia Subsystem (IMS); Media handling and interaction" .

"Support of Immersive Teleconferencing and Telepresence for Remote Terminals" (ITT4RT) has been defined in 3GPP SP-180985. The objective of ITT4RT is to specify virtual reality (VR) support in MTSI (Multimedia Telephony Service for IMS) in 3GPP TS 26.114 and IMS-based (Internet Multimedia Subsystem) Telepresence in 3GPP TS 26.223 to enable support of an immersive experience for remote terminals joining teleconferencing and telepresence sessions. ITT4RT focuses on efficient VDD (Viewport Dependent Delivery). An important QoE (Quality of Experience) parameter for VDD is the motion to high-quality delay value. Any delay in updating the High Quality viewport area after head motion adversely impacts the user experience. While minimal motion to high quality delay is important for end user, to obtain overall efficient bandwidth utilization in the end to end system and cost effectiveness in provisioning of such a service is important for telecom infrastructure providers. This becomes more apparent when the geographical spread of content contributing node and consumption node across the world is considered. For example, omnidirectional capture sensors are used as IoT sensors in various industrial use cases. The IoT data consumers can be numerous and spread across the globe.

Viewport dependent delivery (VDD) is a method to improve bandwidth efficiency by reducing the bit rate of the delivered content to the user by removing the portion of the content which is unwatched because it is outside of a user's viewport. Viewport dependent delivery is being standardized for conversational omnidirectional video content in 3GPP SA4 within the ITT4RT work item. In order to reduce data waste, a subset (i.e., less than the entire coverage) of the omnidirectional video may be delivered from a sender to a receiver at a higher quality, which covers the expected viewport orientation. Due to a delay in responding to a change in viewport orientation at the receiver, a region greater than a current viewport (e.g., referred to as margin, i.e., region at the periphery of the viewport) is delivered at a higher quality. This is expected to reduce the probability of a low-quality video in the viewport.

Areas outside the viewer's viewport may be referred to as margins. An area outside the viewport and the margins may be called as a background or a background area. Margins can be extended on all or some sides of the viewport and may be at the same quality (or resolution) as the viewport or at a quality (or resolution) lower than the viewport but higher than the background. The quality of the image (e.g., resolution) may be higher in the viewport region than in the area outside the viewport and the margins.

RTP is widely used for real-time transport of timed media such as audio and video. RTP may operate on top of the User Datagram Protocol (UDP), which in turn may operate on top of the Internet Protocol (IP). RTP is specified in Internet Engineering Task Force (IETF) Request for Comments (RFC) 3550, available from www.ietf.org/rfc/rfc3550.txt. In RTP transport, media data is encapsulated into RTP packets. Each media type or media coding format may have a dedicated RTP payload format.

An RTP session is an association among a group of participants communicating with RTP. It is a group communications channel which can potentially carry a number of RTP streams. An RTP stream is a stream of RTP packets comprising media data. An RTP stream is identified by a synchronization source (SSRC) belonging to a particular RTP session. SSRC may refer to either a synchronization source or a synchronization source identifier that is the 32-bit SSRC field in the RTP packet header. A synchronization source is characterized in that all packets from the synchronization source form part of the same timing and sequence number space, so a receiver device may group packets by synchronization source for playback. Examples of synchronization sources include the sender of a stream of packets derived from a signal source such as a microphone or a camera, or an RTP mixer. Each RTP stream is identified by a SSRC that is unique within the RTP session.

A uniform resource identifier (URI) may be defined as a string of characters used to identify a name of a resource. Such identification enables interaction with representations of the resource over a network, using specific protocols. A URI is defined through a scheme specifying a concrete syntax and associated protocol for the URI. The uniform resource locator (URL) and the uniform resource name (URN) are forms of URI. A URL may be defined as a URI that identifies a web resource and specifies the means of acting upon or obtaining the representation of the resource, specifying both its primary access mechanism and network location. A URN may be defined as a URI that identifies a resource by name in a particular namespace. A URN may be used for identifying a resource without implying its location or how to access it.

The fifth generation (5G) technology standard for broadband cellular networks and is designed to connect billions of devices, thus enabling Internet of Things (IoT), i.e., a communication from machine to machine. 5G provides a unique opportunity to distribute processing nodes such that computing is available nearest to the point of use. It is important to leverage appropriate computing nodes to serve the VDD content with low latency and optimal utilization of the end to end 5G network.

The purpose of the present embodiments is clarified by a use case:
A VDD server is implemented, wherein the VDD server receives omnidirectional video from an entity (for example NVIDIA^{®} Jetson Nano^{™}), which delivers content to the media server (acting as MCU).

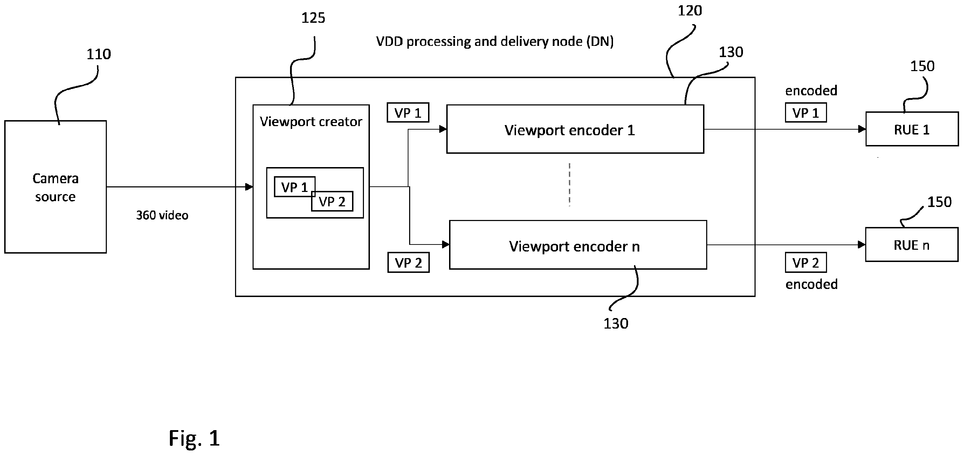

A first problem relating to the aforementioned use case, is scalability by limiting encoders required per node: The contributing camera can deliver omnidirectional video to the nearest edge node. In a practical scenario, NVIDIA^{®} Jetson Nano^{™} card has a hard limit with three simultaneous encoder. However, there is a need for NVIDIA Quadro^{®} card for unlimited number of NVIDIA Encoders (NVENC). Software encoder can be used but would be slow for low-delay live video streaming case. This is a problem when there is a need to scale the VDD server to be able to support large number of receives user equipment (UE). The problem can be circumvented by using overlapping regions: there can be four overlapping regions of 180-degrees, each covering the entire 360-degree content. Without overlap, more than one region would be needed for a single viewport (e.g., when the viewport overlaps two non-overlapping regions). There is a possibility to use multiple single encoding instances. However, if a limited number of encoder instances is used, coverage of omnidirectional video leads to additional bandwidth (and in some cases encoding) wastage due to excess margins. Figure 1 shows an example of a general WD system with VDD-UE pair relationship and scalable problems.

In the video streaming system of Figure 1 a single connector and delivery node is used. A camera device (e.g. IoT camera) 110 streams the immersive 360-degree HD video to the processing and delivery node (DN) 120 in the network environment. For the sake of bandwidth saving, a viewport creator 125 divides the input stream into sub-bitstreams (uncompressed VP1 and VP2, for example); and then followed by the encoder instance (viewport encoders) 130 at the same level of visual quality but a low bandwidth (typically, one fifth of original bandwidth required for a 360 video). The receiver user equipment (RUE) 150 can control the viewports independently. Without appropriate scalability, there is significant reduction in bandwidth efficiency due to the delivery of higher margins to reduce the number of encoders in a single node.

A second problem relating to the use case is in efficient delivery and optimal end-to-end network utilization. One of the problems with viewport dependent delivery is an additional data that a given viewport must contain. This additional data is included to compensate for the network and system latencies and ensure that high quality content for a new viewport due to head motion can be provided. For zero latency network, additional data can be negligible. There is a need to minimize latency for the viewport dependent delivery between the VDD server and the RUEs. It is challenging to obtain/ ensure minimal end-to-end network latency, if the VDD server is not at the edge of the network with close proximity to the RUE. The close proximity network between VDD server and RUEs is a necessary condition to ensure low round-trip time (RTT) between the VDD server and the RUE. Furthermore, there is a need to minimize the end-to-end network bandwidth utilization for serving omnidirectional VDD for multiple RUEs spread across different geographical locations.

The present embodiments provide a solution, where VDD workload is distributed to multiple edge based nodes, which are in proximity to the RUEs, by means of which the aforementioned problems can be alleviated.

Although ITT4RT specifies omnidirectional conversational video delivery, it does not address the aspect of optimized end-to-end architecture to achieve scalable and efficient implementations.

The present embodiments relate to a method for scalable computing node instantiation for efficient viewport dependent delivery of immersive low-latency and real-time media. This is performed by provisioning the computing nodes as edge nodes in proximity to the content contribution UEs and distribution UEs. The edge nodes for low latency ingestion from the sender UE is referred to as connector-node (CN), whereas the edge nodes for low latency distribution to the receiver UEs are referred to as distributor-node (DN). This results in distributing the VDD functionality across one or mode distribution-nodes and one or more connector-nodes. This is achieved by signaling the VDD method between the connector-nodes and the distributor-nodes while being transparent to the sender UE and the receiver UE.

According to an embodiment, the distributor-nodes and connector node agree on the content delivery functionality in accordance with their respective receiver UE demands. This can comprise one or more of the following methods:
- multicast delivery of viewport independent content delivery from the connector-node CN and to the corresponding distributor-nodes DNs. The decision to use this mode is based on the distributor-node's DN capability to use multicast and the viewport ranges requested by the distributor-nodes DN from the connector-node CN.
- Unicast delivery of viewport independent content delivery from the connector-node CN to all the distributor-nodes DNs, based on the distributor-node DN.
- Unicast delivery of viewport dependent content derived by tile merging to each distributor-node DN.
- Uncast delivery of viewport dependent content delivery selected from one of the sphere-locked regions.

One of the above content delivery methods between the connector-node CN and distributor-nodes DN is selected by the connector-node CN based on the viewport ranges required and the distributor-node DN capability, while reducing bandwidth utilization between the connector-node CN and distributor-nodes DN.

According to another embodiment, the immersive low-latency or real-time media is the omnidirectional video captured by IoT sensors contributing content to the connector-nodes, the viewport dependent delivery is performed by the distributor-nodes in network proximity to the geographically distributed receiver UEs.

According to another embodiment, the immersive low-latency or real-time media is volumetric video captured by number of IoT sensors contributing content to the connector-nodes, and the viewport dependent delivery is performed by the distributor-nodes in the network proximity to the geographically distributed receiver UEs. An example of a volumetric video can be content encoded by visual volumetric video-based coding (V3C) and its application video-based point cloud compression (V-PCC) or MPEG immersive video (MIV) defined in ISO/IEC 23090-5 and ISO/IEC 23090-12 respectively. Visual volumetric video-based Coding (V3C) relates to a core part shared between ISO/IEC 23090-5 (V-PCC (Video-based Point Cloud Compression)) and ISO/IEC 23090-12 (MIV (MPEG Immersive Video)). V3C enables the encoding and decoding processes of a variety of volumetric media by using video and image coding technologies. This is achieved through first a conversion of such media from their corresponding 3D representation to multiple 2D representations, also referred to as V3C video components, before coding such information. Such representations may include occupancy, geometry, and attribute components. The occupancy component can inform a V3C decoding and/or rendering system of which samples in the 2D components are associated with data in the final 3D representation. The geometry component contains information about the precise location of 3D data in space, while attribute components can provide additional properties, e.g., texture or material information, of such 3D data. An example is shown in

According to another embodiment, different VDD method may be used between a camera and a connector-node (C₁-CN₁); between a connector-node and a distributor-node (CN₁-DN₁); and between a distributor-node and a receiver user equipment (DN₁-RUE₁). For example, connector-node CN₁ → distributor-node DN₁ may use sphere-locked VDD, but distributor-node DN₁ → receiver user equipment RUE₁ uses viewport locked mode. The use of different VDD methods is different compared to a default scenario, where the receiver user equipment RUE₁ would be able to retrieve data from content source, such as camera C₁, only with a single VDD method irrespective of the network separation between them. In case of volumetric content, relevant viewer position dependent delivery method for volumetric content (e.g., volumetric video) can also be negotiated. One such example could be the real-time patch packing and partition merging for volumetric video.

According to yet another embodiment, the connector-node CN₁ as well as each of the distributor-nodes DNₓ may comprise a pool of computing nodes thus allowing further scalability and redundancy to the MCU (Multipoint Conferencing Unit) which appears to the content source C₁ and receiver user equipment RUE_{N} as single entity.

In an network computing resource provisioning embodiment, any network provisioning approach, such as network based media processing can instantiate computing resources based on the network proximity of the sender and receiver UEs. The workflow description can indicate proximity node requirements for the connector-node and the distributor-node.

Scalable distributed VDD complexity can be hidden from the sender UE and the receiver UEs according to the following example implementation:
- A provisioning service initiates the connector-node CN and distributor-node DN depending on the contributing camera or capturing system (in case of volumetric content) and player location in the network.
- The signalling and media delivery between the connector-node CN and distributor-node DN can be hidden from the camera and player UEs. This allows the end devices to be "conventional" client, e.g. MTSI or WebRTC compliant clients.
- The implementation enables the receiver UE to make a VDD operation like any other MTSI client.

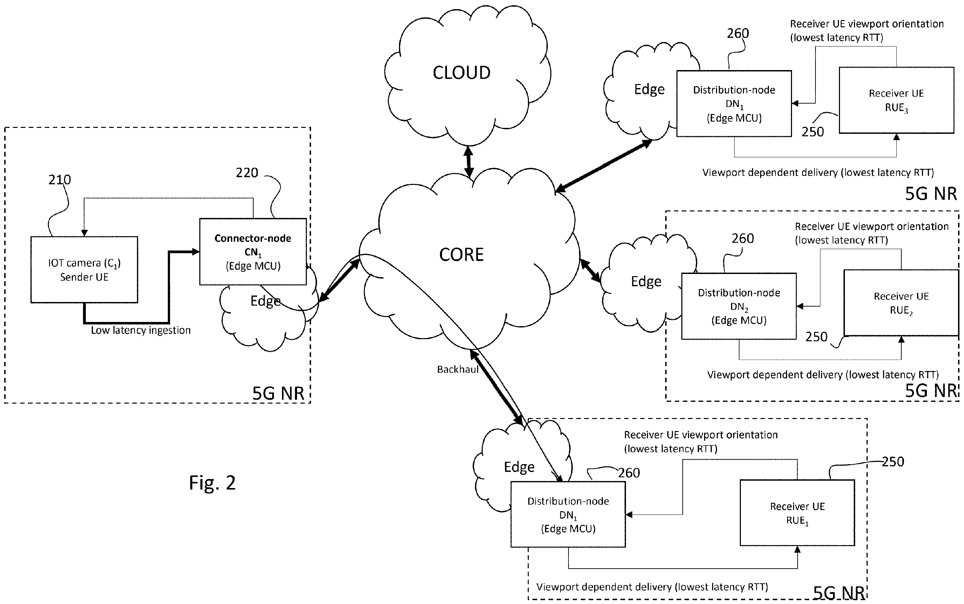

Figure 2 illustrates the end-to-end system overview. The network is abstracted into two parts, i.e., core and edge, for simplicity, without loss of generality. There are immersive media capture or contributing devices such as IoT cameras 210 in the network. IoT camera C₁ 210 can represent the omnidirectional video capture device, i.e., content source, connected via edge node referred to as connector-node CN₁ 220. The receivers or consumers of the captured immersive media are represented by receivers RUE₁, RUE₂, RUE₃ 250. The receiver UEs 250 are connected to the network via computing edge nodes referred to as distributor-nodes DN₁, DN₂, DN₃ 260 etc. The computing infrastructure provisioning and instantiation is performed by an orchestration mechanism which takes into account the following aspects:
- computing node capability to facilitate exploitation of computing nodes with constrained capabilities;
- proximity to the contributing devices (e.g., such as content source C₁) or consuming devices (e.g., receiver user equipment RUE₁) in order to minimize end-to-end latency and minimize the margin size (i.e., additional data) requirements in case of VDD delivery;
- efficient media delivery within the core network by reducing the number of redundant parallel unicast flows in different parts of the core network.

In the illustration of Figure 2, each distributor-node DNᵢ 260 is shown as serving a single receiver UE 250. However, it is used in the figure only for the simplicity of the presentation and in practice such one-to-one relationship is not required. For a given geographical proximity, a single distributor-node DN 260 may be instantiated to serve one or more receiver UE RUE 250. Furthermore, additional distributor-nodes DN may be instantiated in a geographical proximity if there are additional receivers which cannot be served by a single distributor-node DN.

### Multi-stage VDD creation steps:

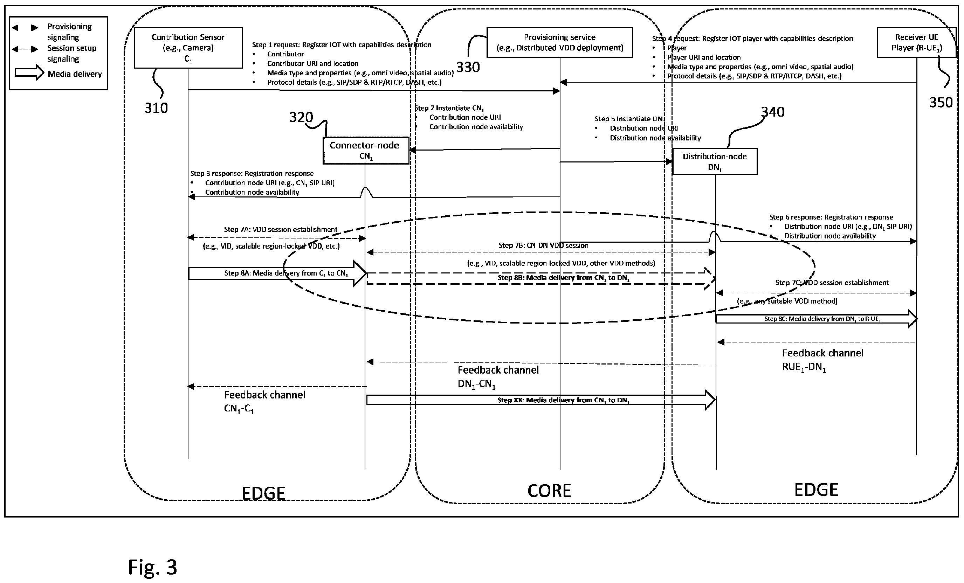

An example sequence of steps are presented in Figure 3 and described in the following. The illustration comprises signaling steps between the different entities. Entities in this example system are:
- The contribution sensor C1 310 (e.g., content source, a camera) that captures or creates immersive media to be delivered with low latency to the receivers UEs 350 in a bandwidth efficient manner with as low latency as possible.
- The receiver UE or player 350 representing the consumption devices that may be geographically spread out globally.
- Provisioning service 330 that generates the nodes and performs orchestration signaling between the various entities to achieve the benefits of multi-stage VDD for immersive media.
- Connector-node CN₁ 320 that provides immersive media in a viewport dependent or independent manner for maximum quality with maximum bandwidth efficiency to the relevant entities to minimize end to end network congestion and optimize bandwidth utilization in the network.
- Distributor-node DN₁ 340 that provides media in a viewport dependent manner to the player or receiver UE 350 with minimal latency and maximum quality.

The entities shown in Figure 3 can implement the following steps:
1. step, where the contribution sensor C₁ 310 registers with capabilities description with specific information;
2. step, where connector-node CNᵢ320 is instantiated such that connector-node CNᵢ 320 (edge MCU computing node) is proximate to the contribution sensor C₁ 310;
3. step, where contribution sensor C₁ 310 receives a registration response. Subsequently, contribution sensor C₁ 310 uses connector-node CN₁ 320 URI to instantiate a VDD or even VID session (for unicast, multicast, broadcast);
4. step, where receiver UE RUE₁ 350 registers with capability description and selects the content to be consumed based on the discovery of C₁ 310 from the provisioning service or via other means. "Via other means" can include having this information in the contact list of the receiver UE RUE₁ 350; and
4. step, where receiver UE RUE₁ 350 registers with capabilities description interested in consuming the immersive media provided by the contribution sensor C₁ 350;
5. step, where distributor-node DN₁ is instantiated in network proximity to the receiver UE RUE₁ 350 access network edge with specific information. Subsequently, receiver UE RUE₁ 350 uses distributor-node DN₁ 340 URI to instantiate VDD session with contribution sensor C₁ 310. The distributor-node DN₁ 340 URI for VDD session will be provided by the provisioning service 330 to the receiver UE RUE₁ 350. Further details will be described in a section "Content discovery and session establishment" that will follow;
6. step, where receiver UE RUE₁ 350 receives a registration response;
7. step, where VDD session is established between the contribution sensor C1 310 and receiver user equipment RUE1 350 with a possibility to configure VDD parameters separately for each pair (C₁-CN₁, CN₁-DN₁, DN₁-RUE₁);
8. step, where the media flow for each of the phases C₁-CN₁, CN₁-DN₁ and DN₁-RUE₁ can be different based on the VDD parameters (which can also include VID). For example, the flow 8a can be VID, the flow 8b can be VDD with a margin M1, the flow 8c can be VDD with margin M2 (where M1 >M2).

In step 1, the specific information comprises:
- Registration type: Contributor
- Contributor URI
- Contributor location
- Media type and properties (e.g., omnidirectional video, volumetric video, supported codecs, spatial audio, etc.)
- Feedback type (orientation, orientation and translation)
- Protocol details (e.g., SIP/SPD (Session Initiation Protocol/Session Description Protocol) & RTP/RTCP (Real-time Transfer Protocol/RTP Control Protocol), DASH (Dynamic Adaptive Streaming over HTTP), etc.)
- Contributor state (Active, Error, Waiting).

In step 3, the registration response comprises information on
- Connector-node with specified URI (e.g., CN₁ SIP URI or webRTC URI or any RTC URI);
- Connector-node with specified availability (e.g., period).

In step 4, the receiver UE's capabilities description comprises the following information:
- Register type: Player
- Player URI
- Player location
- Media type and properties (e.g., supported codecs, omnidirectional video, volumetric video etc.)
- Feedback type (it can be a subset of the feedback offered by the capturing system
- Feedback channel (RTP, RTCP, HTTP, etc.)
- Protocol details (e.g., SIP/SDP & RTP/RTCP, DASH, etc.)

In step 5, the specific information comprises
- Distributor-node with the specified URI
- Distributor-node availability (e.g., period)

In step 6, the registration response comprises the following:
- Distributor-node URI (e.g., DN₁ SIP URI or webRTC URI or any RTC URI)
- Distributor-node with specified availability (e.g., period)

In step 7, the session establishment is carried out as follows:
a) The contribution sensor C₁ initiates session with public URI for the session which maps to the connector-node CN₁
b) The receiver UE RUE₁ initiates session with public URI for the session which maps to the distributor-node DN₁
c) The session between connector-node CN₁ and distributor-node ,DN₁ is established.

### Content discovery and session establishment:

The present embodiments aim to hide the complexity of connectivity between the connector-node CNᵢ and distributor-node DNᵢ, and delivery methodology from the end point such as contribution sensor C₁ and receiver user equipment RUE₁. This is made possible by the content discovery and provisioning service.

The provisioning service (shown as 330 in Figure 3) can realize the multi-stage VDD infrastructure for immersive media delivery in real-time for example as follows:
- by indicating the available content for consumption. This requirement may be out of scope of the basic RTC stack. Consequently, a higher level mechanisms needs to take care of providing the immersive content available for consumption.
- by indicating the state of the available content providers (e.g., IoT sensor). The state can be active (meaning real-time media transmission is progress), waiting (registered with the provisioning service but not yet active), error.

The encapsulation or abstraction of multi-stage VDD infrastructure can be implemented over HTTP (Hypertext Transfer Protocol) or MQTT (Message Queuing Telemetry Transport) or any suitable protocol. This may be done in the following manner:
- In case, where contribution sensor C₁ is available as a standalone IoT camera available to deliver omnidirectional video, the C₁ SIP URI (or any suitable URI) is provided to the receiver RUE₁ to initiate the media session.
- In case where contribution sensor C₁, after having registered with provisioning service, has resulted in instantiation of connector-node CN₁ edge MCU in proximity to contribution sensor C₁, the contribution sensor C₁ uses connector-node CN₁ URI to initiate session. The provisioning service, on the other hand, provides connector-node CN₁ URI to receiver UE RUE₁ in order to retrieve contribution sensor C₁ media in a slightly more scalable manner. This assumes provisioning service has not instantiated distribution-node DN₁ edge MCU in proximity to receiver UE RUE₁.
- In case the provisioning service has instantiated connector-node CN₁ in proximity to contribution sensor C₁ and distributor-node DN₁ in proximity to receiver UE RUE₁, the contribution sensor C₁ establishes session with connector-node CN₁ using connector-node CN₁ SIP URI, and receiver UE RUE₁ establishes session with distribution-node DN₁ with distribution-node DN₁ SIP URI to consume contribution sensor C₁ media in a scalable and bandwidth efficient manner.

Although each of the session links (C₁-CN₁, CN₁-DN₁, DN₁-RUE₁) can have different VDD mechanism approaches, or use VID approach, depending on the use case scenario there can be benefit for joint orchestration of VDD mechanisms and its parameters. Following are some of the possible examples:
- Example 1:
   ∘ C₁-CN₁ is VID (viewport independent delivery), this minimizes complexity for IoT sensor device;
   ∘ CN₁-DN₁ scalable sphere-locked VDD
   ∘ DN₁-RUE₁ sphere locked VDD
- Example 2:
   ∘ C₁-CN₁ is VID
   ∘ CN₁-DN₁ sphere-locked VDD with margin M₁
   ∘ DN₁-RUE₁ sphere locked VDD with margin M₂ (M₁ > M₂)

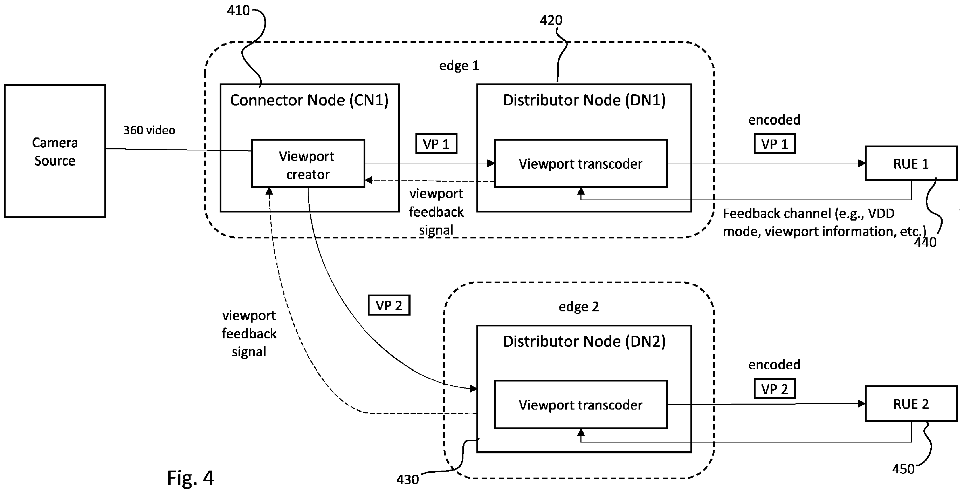

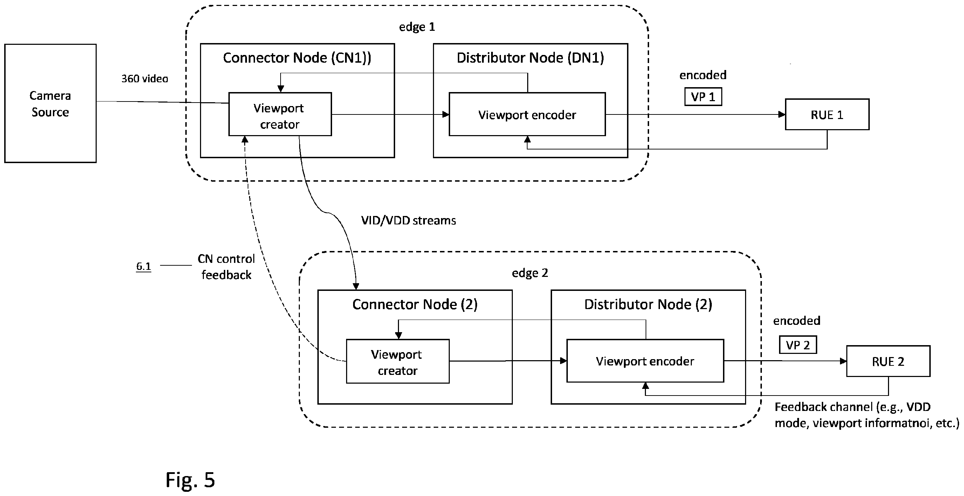

Figure 4 and Figure 5 illustrate examples of system diagrams covering different deployment options. Figure 4 illustrates an example, where multiple distributor-nodes (DNs) are used to scale out the processing when single distributor-node DN reaches its maximum transcoding capacity. The connector-node (CN) 410 receives viewport data through the feedback channels from multiple distributor-nodes DN, 420, 430 even from different edge networks. The data planes (CN₁ - DN₁ and CN₁ - DN₂) can use different transport protocols to reduce latency and any other technical issues such as NATs or firewalls. The new distributor-nodes DN can be created automatically under one of the following conditions, or manually:
- The number of transcoders reach the threshold/limit of DN₁;
- The RUE 2 450 is in the different edge network than the RUE 1 440 for DN₁;
- The RUE 2 450 can use a different streaming protocols than the one used by the DN₁;
- The RUEs 440, 450 are having different QoS parameters. These can be different due to network conditions as well as subscription models for each of the RUEs. For example, an RUE with subscription models which requires prioritizing total bandwidth consumption to reduce costs will have to prioritize quality or motion-to-high-quality latency by keeping limited margin for head motion.
- The RUE 2 450 has different device specific encoding requirements than the RUE 1 440 for DN₁ e.g., the devices have a larger FoV (requiring higher resolution) or different degrees of freedom.

Figure 5 illustrates another example, where a complete pair of connector-node CN and distributor-node DN is duplicated. The connector-node CN control signal (6.1) communicated between connector-node CN₁ and connector-node CN₂ (newly created one) is much less frequent and small, compared to the viewport feedback signals in Figure 4 between DN₂ and CN₁ as the viewport creator runs locally in CN₂. The data stream between connector-node CN₁ and connector-node CN₂ can be in VID (viewport-independent delivery) mode. Alternatively, a VDD mode can be supported based on the connector-node CN control feedback (6.1).

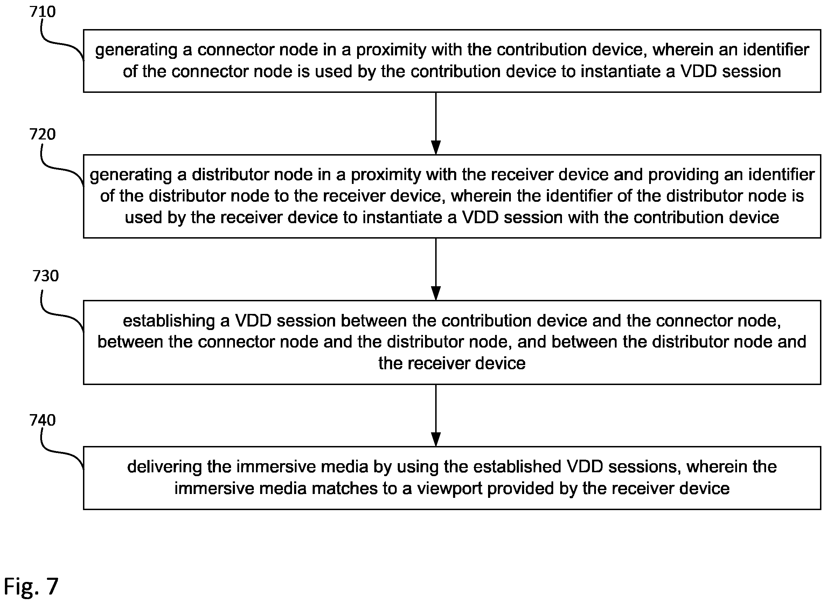

The method according to an embodiment is shown in Figure 7. The method generally comprises generating 710 a connector node in a proximity with the contribution device, wherein an identifier of the connector node is used by the contribution device to instantiate a VDD session; generating 720 a distributor node in a proximity with the receiver device and providing an identifier of the distributor node to the receiver device, wherein the identifier of the distributor node is used by the receiver device to instantiate a VDD session with the contribution device; establishing 730 a VDD session between the contribution device and the connector node, between the connector node and the distributor node, and between the distributor node and the receiver device; and delivering 740 the immersive media by using the established VDD sessions, wherein the immersive media matches to a viewport provided by the receiver device. Each of the steps can be implemented by a respective module of a computer system.

An apparatus according to an embodiment comprises means for generating a connector node in a proximity with the contribution device, wherein an identifier of the connector node is used by the contribution device to instantiate a VDD session; means for generating a distributor node in a proximity with the receiver device and providing an identifier of the distributor node to the receiver device, wherein the identifier of the distributor node is used by the receiver device to instantiate a VDD session with the contribution device; means for establishing a VDD session between the contribution device and the connector node, between the connector node and the distributor node, and between the distributor node and the receiver device; and means for delivering the immersive media by using the established VDD sessions, wherein the immersive media matches to a viewport provided by the receiver device. The means comprises at least one processor, and a memory including a computer program code, wherein the processor may further comprise processor circuitry. The memory and the computer program code are configured to, with the at least one processor, cause the apparatus to perform the method of Figure 7 according to various embodiments.

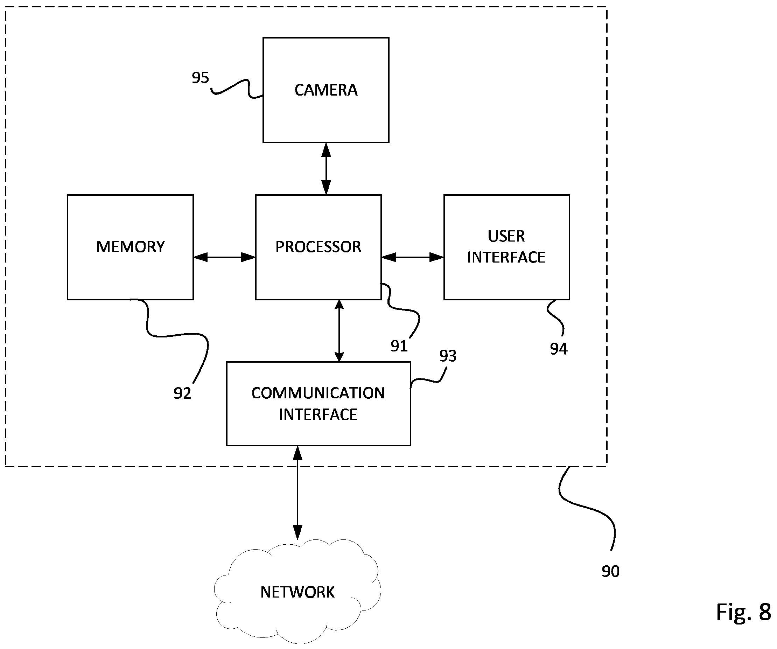

An example of an apparatus is shown in Figure 8. The apparatus of Figure 8 may represent the contribution device or the receiver device or the provisioning service shown in Figure 3. Several functionalities can be carried out with a single physical device, e.g. in a single processor, if desired. The apparatus 90 comprises a main processing unit 91, a memory 92, a user interface 94, a communication interface 93. The apparatus according to an embodiment, shown in Figure 8, also comprises a camera module 95. The memory 92 stores data including computer program code in the apparatus 90. The computer program code is configured to implement the method according to flowchart of Figure 7. The camera module 95 receives input data, in the form of video stream, to be processed by the processor 91. Instead of or in addition to the camera module, a content creation module can exist in the apparatus. The communication interface 93 forwards processed data for example to a display of another device, such a HMD, or to another device, such as receiver. The communication interface 93 may also receive media data from another device, such as a contribution device. When the apparatus 90 is a content source comprising the camera module 95, user inputs may be received from the user interface or over a network from a receiver device as a feedback on e.g. a viewport. If the apparatus 90 is a middlebox in a network (such as the provisioning service of Figure 3), the user interface is optional, such as the camera module.

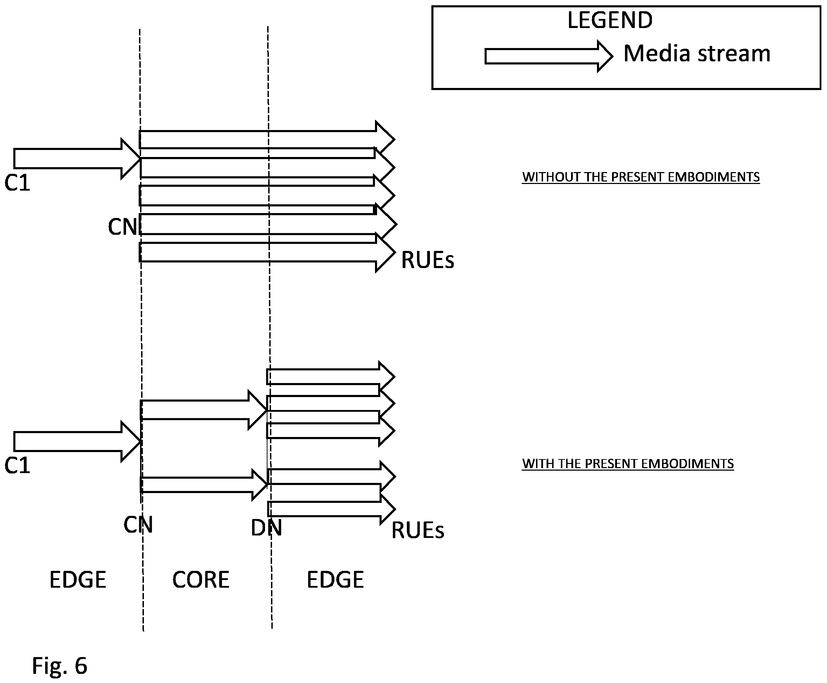

The various embodiments may provide advantages. For example, the present embodiments provide better de-coupling the provisioning jobs from connector-nodes CN for content sources (i.e., contribution devices) and distributor-nodes DN for receiver UEs. The instantiation of connector-nodes CN and distributor-nodes DN can be de-coupled to support scalability. The present embodiments also facilitate deployment of redundant and scalable low latency delivery infrastructure. The present embodiment may also leverage low cost hardware (e.g., supporting few simultaneous encoders in the low cost connector-node) in the edge nodes for serving users that are spread across a wide geographical area. The present embodiments also distribute workload for viewport dependent delivery for immersive media across the network. The present embodiments may also enable an improved QoE with reduced latency due to leveraging proximal connector and distributor edge node. Finally, the present embodiments enable an improved end-to-end network bandwidth utilization (see Figure 6).

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus for viewport dependent delivery (VDD) of immersive media between a contribution device and a receiver device, the apparatus comprising:
- means for generating a connector node in a proximity with the contribution device, wherein an identifier of the connector node is used by the contribution device to instantiate a VDD session;
- means for generating a distributor node in a proximity with the receiver device and for providing an identifier of the distributor node to the receiver device, wherein the identifier of the distributor node is used by the receiver device to instantiate a VDD session with the contribution device;
- means for establishing a VDD session between the contribution device and the connector node, between the connector node and the distributor node, and between the distributor node and the receiver device; and
- means for delivering the immersive media by using the established VDD sessions, wherein the immersive media matches to a viewport provided by the receiver device.

2. The apparatus according to claim 1, further comprising means for delivering the viewport of the receiver device from the receiver device to the connector node by using the established VDD sessions.

3. The apparatus according to claim 1 or 2, further comprising means for generating a distributor node for each of a plurality of receiver devices.

4. The apparatus according to claim 3, further comprising means for generating a connector node for each distributor node.

5. The apparatus according to any of the claims 1 to 4, wherein the established VDD sessions use different VDD methods.

6. The apparatus according to claim 5, wherein a VDD method is one of the following: scalable sphere-locked VDD with or without margin; sphere-locked VDD with or without margin.

7. The apparatus according to any of the claims 1 to 6, further comprising means for indicating available immersive media for consumption or states of available contribution devices.

8. A method for viewport dependent delivery (VDD) of immersive media between a contribution device and a receiver device, the method comprising:
- generating a connector node in a proximity with the contribution device, wherein an identifier of the connector node is used by the contribution device to instantiate a VDD session;
- generating a distributor node in a proximity with the receiver device and providing an identifier of the distributor node to the receiver device, wherein the identifier of the distributor node is used by the receiver device to instantiate a VDD session with the contribution device;
- establishing a VDD session between the contribution device and the connector node, between the connector node and the distributor node, and between the distributor node and the receiver device; and
- delivering the immersive media by using the established VDD sessions, wherein the immersive media matches to a viewport provided by the receiver device.

9. The method according to claim 8, further comprising delivering the viewport of the receiver device from the receiver device to the connector node by using the established VDD sessions.

10. The method according to claim 8 or 9, further comprising generating a distributor node for each of a plurality of receiver devices.

11. The method according to claim 10, further comprising generating a connector node for each distributor node.

12. The method according to any of the claims 8 to 11, wherein the established VDD sessions use different VDD methods.

13. The method according to claim 12, wherein a VDD method is one of the following: scalable sphere-locked VDD with or without margin; sphere-locked VDD with or without margin.

14. The method according to any of the claims 8 to 13, further comprising means for indicating available immersive media for consumption or states of available contribution devices.

15. An apparatus comprising at least one processor, memory including computer program code, the memory and the computer program code configured to, with the at least one processor, cause the apparatus to perform at least the following:
- generate a connector node in a proximity with the contribution device, wherein an identifier of the connector node is used by the contribution device to instantiate a VDD session;
- generate a distributor node in a proximity with the receiver device and providing an identifier of the distributor node to the receiver device, wherein the identifier of the distributor node is used by the receiver device to instantiate a VDD session with the contribution device;
- establish a VDD session between the contribution device and the connector node, between the connector node and the distributor node, and between the distributor node and the receiver device; and
- deliver the immersive media by using the established VDD sessions, wherein the immersive media matches to a viewport provided by the receiver device.
